# FASCICULE DE BREVET EUROPEEN

(11) **EP 2 953 841 B1**
(45) Date de publication et mention de la délivrance du brevet: **26.07.2017**
(21) Numéro de dépôt: 14704860.7
(22) Date de dépôt: 30.01.2014
(51) Int. Cl.: B62D 21/11

(54) **SUPPORT MULTIFONCTION POUR LA FIXATION DE PLUSIEURS PIECES SUR LE CHÂSSIS D'UN VEHICULE**
MULTIFUNKTIONELLE HALTERUNG ZUR BEFESTIGUNG MEHRERER TEILE AM CHASSIS EINES FAHRZEUGS
MULTIFUNCTIONAL MOUNTING FOR ATTACHING A PLURALITY OF PARTS TO THE CHASSIS OF A VEHICLE

(30) Priorité: 07.02.2013 FR 1351059
(43) Date de publication de la demande: 16.12.2015
(73) Titulaire: Peugeot Citroën Automobiles SA, 78140 Vélizy Villacoublay (FR)
(72) Inventeur: MAYAUD, Cedric, F-78420 Carrieres sur Seine (FR); MARQUES, Jean Pierre, F-91330 Yerres (FR)
(74) Mandataire: Renous Chan, Véronique
(86) Numéro de dépôt international: PCT/FR2014/050160
(87) Numéro de publication internationale: WO 2014/122380

(56) Documents cités:
- EP-A2- 1 266 783
- EP-A2- 1 707 475
- DE-A1-102007 033 859
- JP-A- 2011 020 627

## Description

L'invention porte sur un support multifonction pour la fixation de plusieurs pièces sur le châssis d'un véhicule. Le document EP 1 266 783 A2 décrit un support multifonction selon le préambule de la revendication 1.

De façon classique, l'organe désigné « berceau » dans un véhicule automobile par exemple est un support métallique accroché au châssis du véhicule, qui a pour rôle d'assembler les pièces métalliques telles que le moteur, les amortisseurs, etc. Il a également pour fonction de recevoir la fixation du capteur de différence de pression (dit aussi capteur « DP ») du filtre à particules (ou « FAP »), du faisceau d'alimentation dudit capteur DP et de la canalisation du système de réduction catalytique sélective (dit « RCS » ou « SCR », ce dernier étant l'acronyme de l'expression anglaise « Selective Catalytic Réduction »). De façon connue en soi et courante, ce système « SCR » est utilisé pour réduire les oxydes d'azote émis par le moteur à combustion interne du véhicule.

A l'heure actuelle, les pièces mentionnées ci-dessus, à savoir le capteur DP du FAP, son faisceau d'alimentation et la canalisation du SCR sont fixés sur le châssis ou le berceau du véhicule au moyen de supports distincts.

Divers supports de faisceaux du compartiment moteur d'un véhicule sont déjà connus de l'art antérieur.

A titre d'exemple, on connaît, selon le document DE 10 2011 012 522 A1, un organe de renforcement, qui présente une partie avant, une partie centrale et une partie arrière intégrées dans les longerons d'une structure de châssis avant d'un véhicule à moteur. Un tronçon de base, plan, relie deux parties latérales l'une avec l'autre. Un ensemble de surfaces externes des parties latérales vient en contact avec des surfaces internes des sections latérales de la partie centrale, de telle sorte qu'une section de base de l'organe de renforcement est espacée de la section de base de la partie centrale. Deux pontets sont prévus entre les deux longerons moteurs.

A titre d'exemple également, on connaît, selon le document DE 10 2006 008 669 A1, un châssis, qui comporte des supports longitudinaux portés dans la région de points de liaison d'un support transversal dans lequel lesdits points de liaison sont déplacés pour être opposés aux extrémités latérales et à la région médiane selon la direction longitudinale d'un véhicule. Le support transversal est disposé en support de paroi avant dans la région d'une paroi avant qui délimite l'habitacle du véhicule.

Le but de la présente invention est de fournir un support multifonction pour la fixation de plusieurs pièces sur le châssis d'un véhicule, par conséquent un support commun pour plusieurs pièces solidaires du châssis.

Un autre but de la présente invention est de fournir un tel support multifonction, qui soit compatible avec plusieurs modèles de véhicules, lesquels modèles sont différents par la structure du berceau du véhicule ou parce qu'ils incorporent des versions différentes du système de direction assistée électrique.

C'est un autre but de la présente invention de fournir un tel support multifonction, qui soit suffisamment robuste pour tenir les efforts éventuels exercés par les commandes de la boîte de vitesses du véhicule, et qui résiste aux températures relativement élevées dues à la proximité avec la ligne d'échappement du véhicule.

Enfin, c'est aussi un but de la présente invention de fournir un tel support multifonction, qui soit de conception, de fabrication et de montages simples, qui soit fiable et économique.

Pour parvenir à ces buts, la présente invention a pour objet un support multifonction pour la fixation de plusieurs pièces sur le châssis d'un véhicule, et ce support multifonction, nouveau, présente une forme générale courbe, repliée sur elle-même mais ouverte. Ce support est fixé sur le berceau du châssis en des points de fixation situés aux extrémités de ladite forme courbe ouverte, de façon à passer au dessus des mécanismes de la direction assistée électrique du véhicule. De plus, ce support présente des interfaces de fixation desdites plusieurs pièces sur le berceau du véhicule.

Selon l'invention, le support multifonction est fixé sur le berceau du châssis, notamment par vissage, en trois points de fixation, à savoir deux points de fixation, qui sont situés sur une première extrémité de ladite forme courbée du support multifonction et qui sont destinés à fixer ce dernier sur la partie arrière du berceau, et un troisième point de fixation, qui est situé sur l'autre extrémité de ladite forme courbée du support multifonction et qui est destiné à fixer ce dernier sur la partie avant du berceau.

De manière préférentielle, les deux points de fixation du support sur la partie arrière du berceau sont des points de fixation du support multifonction au niveau des suspentes de la ligne d'échappement du véhicule, tandis que le point de fixation du support sur la partie avant du berceau est un point de fixation du support multifonction sur la chape de la biellette anti-couple du véhicule.

De préférence, le support multifonction selon l'invention présente deux pattes métalliques, qui sont en extension latérale de ladite première extrémité du support multifonction et qui sont percées, chacune, d'un orifice circulaire pour le passage de moyens de vissage aux deux points de fixation du support multifonction sur la partie arrière du berceau.

De préférence également, le support multifonction selon l'invention comporte, au niveau du point de fixation sur la partie avant du berceau, une vis de fixation, intégrée au support multifonction, pour la fixation de ce dernier sur la chape de la biellette anti-couple du véhicule.

Avantageusement, le support multifonction selon l'invention présente, de plus, dans le voisinage du point de fixation sur la partie avant du berceau, une extension dirigée vers le bas, de forme sensiblement quadrangulaire, destinée à être « clippée » sur la partie avant du berceau pour permettre le positionnement dudit support multifonction sur le berceau.

Selon un mode particulier de réalisation de l'invention, non limitatif de l'objet et de la portée de cette dernière, le support multifonction présente une interface de fixation du capteur de différence de pression du filtre à particules du véhicule, laquelle interface comporte, d'une part, une vis de fixation, intégrée au support multifonction, pour la fixation du capteur de différence de pression, et d'autre part, un orifice, circulaire, qui permet l'indexation dudit capteur de différence de pression et empêche la rotation de ce dernier.

Selon un mode particulier de réalisation de l'invention également, le support multifonction de l'invention présente, d'une part deux orifices oblongs constituant une interface de fixation de la canalisation du système de réduction catalytique sélective du véhicule et, d'autre part, deux orifices oblongs servant d'interface de fixation du faisceau d'alimentation du capteur de différence de pression du filtre à particules du véhicule.

Le support multifonction de l'invention peut, de préférence, être réalisé en matière plastique rigide.

La présente invention a aussi pour objet un véhicule, en particulier un véhicule automobile, qui comporte un support multifonction fixé sur le berceau pour permettre la fixation du capteur de différence de pression du filtre à particules, du faisceau d'alimentation dudit capteur de différence de pression et de la canalisation venant du réservoir du système de réduction catalytique sélective, et ce support multifonction, nouveau, est conforme à celui décrit ci-dessus dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, schématique, du support multifonction selon l'invention montrant principalement les moyens de fixation du support sur le berceau du châssis d'un véhicule automobile,
- la figure 2 est une vue en perspective, schématique, du support multifonction de la figure 1, sous un angle différent de façon à montrer l'interface dudit support avec le capteur de différence de pression du filtre à particules du véhicule,
- la figure 3 est une vue en perspective, schématique, du support multifonction des figures 1 et 2, sous un autre angle encore, de façon à montrer les interfaces dudit support, d'une part, avec le faisceau d'alimentation du capteur de différence de pression du véhicule, et d'autre part, avec la canalisation venant du réservoir du système de réduction catalytique sélective du véhicule, et
- la figure 4 est une vue en perspective du support multifonction des figures précédentes en position fixée sur le berceau du châssis du véhicule.

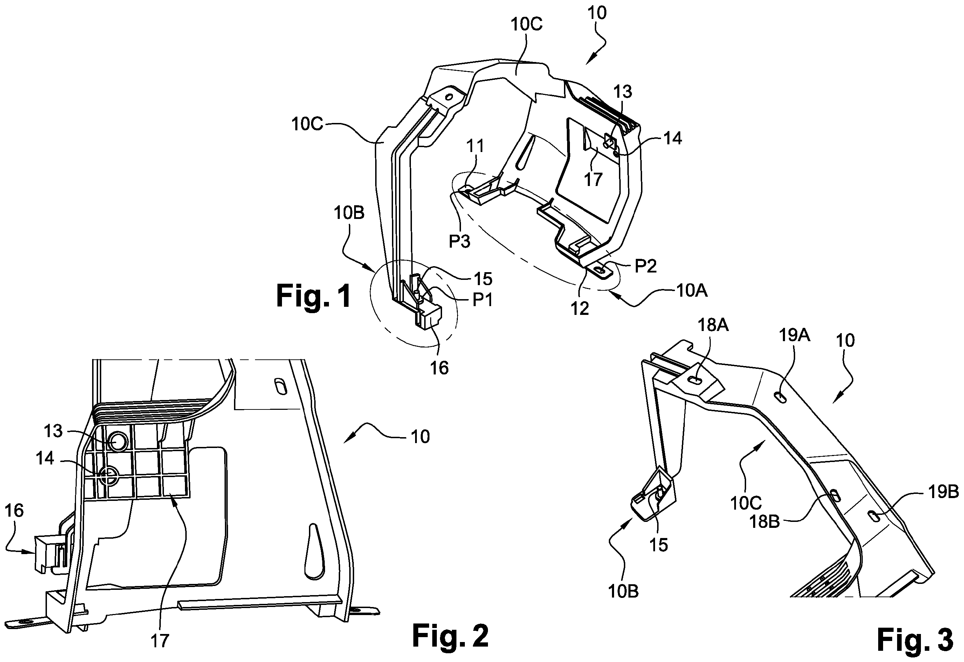

En référence au dessin de la figure 1, on a représenté un exemple de réalisation d'un support multifonction selon la présente invention, de référence générale 10, destiné à la fixation de plusieurs pièces sur le châssis d'un véhicule automobile, par exemple.

Le support 10 présente une forme générale courbe, repliée sur elle-même mais ouverte, présentant trois parties contiguës, à savoir deux parties d'extrémité 10A et 10B, qui sont sensiblement en regard l'une de l'autre et sont séparées par une partie intermédiaire courbe ou en forme de « C » désignée 10C. Ce support 10 est destiné à être fixé, notamment par vissage, sur le berceau du châssis du véhicule en trois points de fixation situés dans les parties d'extrémité en regard 10A et 10B.

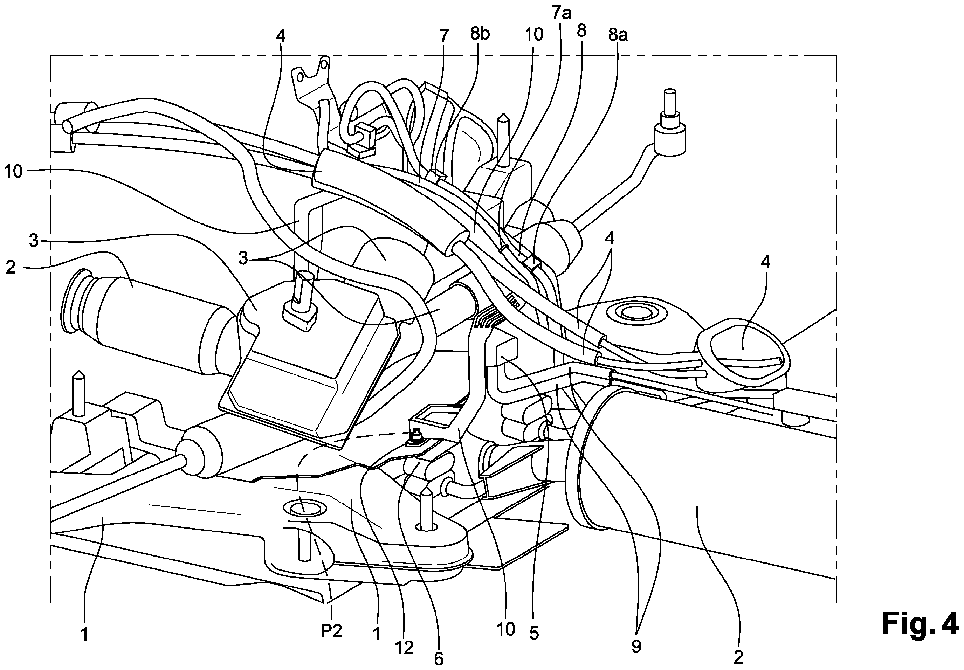

Ces trois points de fixation sont désignés respectivement P1, P2 et P3. Les deux points de fixation P2 et P3 sont situés sur une première extrémité 10A du support 10 et sont destinés à fixer ce dernier sur la partie arrière du berceau référencé 1 sur le dessin de la figure 4. Le troisième point de fixation P1 est situé sur la seconde extrémité 10B du support 10 et est destiné à fixer ce dernier sur la partie avant du berceau 1.

La forme curviligne ou « en boucle ouverte » ou « en C » du support 10 est telle qu'elle permet au support 10 de passer au dessus des mécanismes de la direction assistée électrique du véhicule, référencée 3, comme on peut le voir sur le dessin de la figure 4.

Le support multifonction 10 présente des interfaces de fixation de plusieurs pièces sur le berceau 1 du véhicule, comme il est expliqué plus loin dans le texte.

Comme montré sur le dessin de la figure 1, le support multifonction 10 présente deux pattes métalliques 11 et 12, qui sont en extension latérale de la première extrémité 10A du support 10 et qui sont percées, chacune, d'un orifice circulaire pour le passage de moyens de vissage aux deux points de fixation P3 et P2 du support 10, lesquels deux points de fixation P3 et P2 sont des points de fixation du support 10 au niveau des suspentes (référencées 6 sur la figure 4) de la ligne d'échappement 2 du véhicule (voir également figure 4).

Le troisième point de fixation, P1, est un point de fixation du support 10 sur la chape de la biellette anti-couple (non représentée) du véhicule. Pour assurer ce troisième point de fixation P1, le support multifonction 10 comporte une vis de fixation 15, intégrée au support 10, qui est destinée à être vissée sur la chape de la biellette anti-couple du véhicule. A cette vis intégrée 15 est associée une extension, référencée 16, dirigée vers le bas, de forme sensiblement quadrangulaire, située dans le voisinage du point de fixation P1, qui est destinée à être « clippée » sur la partie avant du berceau 1 pour permettre le positionnement du support 10 sur le berceau 1.

Comme mentionné précédemment, le support 10 est destiné à la fixation de plusieurs pièces sur le berceau du véhicule. A cette fin, il comporte les différentes interfaces de fixation suivantes :
- une interface de fixation du capteur DP du FAP du véhicule, lequel capteur est représenté sur la figure 4 et désigné par la référence numérique 5,
- une interface de fixation de la canalisation du système SCR, laquelle canalisation est représentée sur la figure 4 et désignée par la référence numérique 8, et
- une interface de fixation du faisceau d'alimentation du capteur DP de FAP, lequel faisceau est représenté sur la figure 4 et désigné par la référence numérique 7.

L'interface de fixation du capteur DP 5 est représentée sur le dessin des figures 1 et 2. Cette interface, qui est intégrée sur une extension sensiblement rectangulaire 17 monobloc avec le support 10, comporte :
- une vis de fixation 13, intégrée au support multifonction 10, pour la fixation du capteur DP 5 sur le support 10, et
- un orifice 14, circulaire, qui permet l'indexation du capteur DP 5 et empêche la rotation de ce dernier.

L'interface de fixation de la canalisation 8 du système SCR et l'interface de fixation du faisceau d'alimentation 7 du capteur DP sont représentées sur le dessin de la figure 3.

Deux premiers orifices oblongs, référencés 19A et 19B, servent d'interface de fixation de la canalisation 8 du système SCR du véhicule et deux autres orifices, également oblongs, référencés 18A et 18B, servent d'interface de fixation du faisceau d'alimentation 7 du capteur DP 5 du FAP du véhicule.

On a représenté sur le dessin de la figure 4 le support multifonction 10 selon l'invention vissé sur le berceau 1 du châssis du véhicule aux trois points de fixation mentionnés précédemment, le point de fixation P2 sur la partie arrière du berceau 1 au niveau d'une suspente référencée 6 apparaissant seul sur le dessin. Le support multifonction 10 passe au dessus des mécanismes de la direction assistée électrique 3. Le capteur de différence de pression 5 du FAP est fixé sur le support multifonction 10 par le moyen de la vis de fixation 13 et de l'orifice 14 décrits précédemment. La canalisation 8 du système de réduction catalytique sélective est bridée sur le support multifonction 10 au moyen des agrafes 8a et 8b insérées dans les orifices oblongs 19B et 19B, respectivement, du support 10. Le faisceau d'alimentation 7 du capteur de différence de pression du FAP est bridé sur le support multifonction 10 également au moyen d'agrafes, lesquelles sont insérées dans les orifices oblongs 18A et 18B du support (seule l'agrafe 7a insérée dans le trou oblong 18B est représentée sur le dessin de la figure 4).

On notera que la référence 2 désigne la ligne d'échappement du véhicule, la référence 4 l'ensemble de commande de vitesses et la référence 9 les tuyaux flexibles amont et aval du FAP, qui absorbent le débattement de la ligne d'échappement 2.

Le support multifonction 10 est réalisé en matière plastique, de préférence par moulage. Cette matière plastique est relativement rigide de façon à tenir les efforts éventuels exercés par les commandes de la boîte de vitesses du véhicule. De plus, cette matière plastique doit résister aux températures relativement élevées dues à la proximité de la ligne d'échappement du véhicule, de l'environnement relativement confiné dans la zone du support multifonction, notamment lorsque le moteur est en marche et le véhicule à l'arrêt.

## Revendications

1. Support multifonction pour la fixation de plusieurs pièces sur le châssis d'un véhicule, ledit support présentant une forme générale courbe, repliée sur elle-même mais ouverte, et fixé sur le berceau (1) du châssis en des points de fixation situés aux extrémités de ladite forme courbe ouverte, de façon à passer au dessus des mécanismes de la direction assistée électrique (3) du véhicule, ledit support présentant des interfaces de fixation desdites plusieurs pièces sur le berceau (1) du véhicule, **caractérisé en ce qu'**il est fixé, notamment par vissage, sur le berceau (1) du châssis en trois points de fixation (P1, P2, P3), à savoir deux points de fixation (P2, P3), qui sont situés sur une première extrémité (10A) de ladite forme courbée du support multifonction (10) et qui sont destinés à fixer ce dernier sur la partie arrière du berceau (1), et un troisième point de fixation (P1), qui est situé sur la seconde extrémité (10B) de ladite forme courbée du support multifonction (10) et qui est destiné à fixer ce dernier sur la partie avant du berceau (1).

2. Support multifonction selon la revendication 1, **caractérisé en ce que** les deux points de fixation (P2, P3) sur la partie arrière du berceau (1) sont des points de fixation dudit support multifonction (10) au niveau des suspentes (6) de la ligne d'échappement (2) du véhicule.

3. Support multifonction selon l'une quelconque des revendications précédentes, **caractérisé en ce que** le point de fixation (P1) sur la partie avant du berceau (1) est un point de fixation dudit support multifonction (10) sur la chape de la biellette anti-couple du véhicule.

4. Support multifonction selon la revendication 2, **caractérisé en ce qu'**il présente deux pattes métalliques (11, 12), qui sont en extension latérale de la première extrémité (10A) du support multifonction (10) et qui sont percées, chacune, d'un orifice circulaire pour le passage de moyens de vissage aux deux points de fixation (P3, P2) du support multifonction (10) sur la partie arrière du berceau (1).

5. Support multifonction selon la revendication 3, **caractérisé en ce qu'**il comporte, au niveau du point de fixation (P1) sur la partie avant du berceau (1), une vis de fixation (15), intégrée au support multifonction (10), pour la fixation dudit support multifonction (10) sur la chape de la biellette anti-couple du véhicule.

6. Support multifonction selon la revendication 5, **caractérisé en ce qu'**il présente, de plus, dans le voisinage du point de fixation (P1) sur la partie avant du berceau (1), une extension (16) dirigée vers le bas, de forme sensiblement quadrangulaire, destinée à être « clippée » sur la partie avant du berceau (1) pour permettre le positionnement dudit support multifonction (10) sur le berceau (1).

7. Support multifonction selon l'une quelconque des revendications précédentes, **caractérisé en ce qu'**il présente une interface de fixation du capteur de différence de pression (5) du filtre à particules du véhicule, laquelle interface comporte, d'une part, une vis de fixation (13), intégrée au support multifonction (10), pour la fixation du capteur de différence de pression (5), et d'autre part, un orifice (14), circulaire, qui permet l'indexation dudit capteur de différence de pression (5) et empêche la rotation de ce dernier.

8. Support multifonction selon l'une quelconque des revendications précédentes, **caractérisé en ce qu'**il présente deux orifices oblongs (19A, 19B) servant d'interfaces de fixation de la canalisation (8) du système de réduction catalytique sélective du véhicule.

9. Support multifonction selon l'une quelconque des revendications précédentes, **caractérisé en ce qu'**il présente deux orifices oblongs (18A, 18B) servant d'interface de fixation du faisceau d'alimentation (7) du capteur de différence de pression (5) du filtre à particules du véhicule.

10. Support multifonction selon l'une quelconque des revendications précédentes, **caractérisé en ce qu'**il est réalisé en matière plastique rigide.

11. Véhicule, en particulier véhicule automobile, qui comporte un support multifonction fixé sur le berceau (1) pour permettre la fixation du capteur de différence de pression (5) du filtre à particules, du faisceau d'alimentation (7) dudit capteur de différence de pression (5) et de la canalisation (8) venant du réservoir du système de réduction catalytique sélective, **caractérisé en ce que** ledit support multifonction (10) est conforme à l'une quelconque des revendications précédentes.

## Patentansprüche

1. Multifunktionelle Halterung zur Befestigung mehrerer Teile auf dem Chassis eines Fahrzeugs, wobei die Halterung eine allgemeine gebogene Form, die auf sich selbst zurückgefaltet aber offen ist, aufweist, und auf der Aufhängung (1) des Chassis an Befestigungsstellen befestigt ist, die an den Enden der offenen gebogenen Form verlaufen, so dass sie oberhalb der Mechanismen der elektrischen Servolenkung (3) des Fahrzeugs liegen, wobei die Halterung Befestigungsschnittflächen der mehreren Teile auf der Aufhängung (1) des Fahrzeugs aufweist, **dadurch gekennzeichnet, dass** sie insbesondere durch Schrauben auf der Aufhängung (1) des Chassis an drei Befestigungsstellen (P1, P2, P3) befestigt ist, nämlich an zwei Befestigungsstellen (P2, P3), die auf einem ersten Ende (10A) der gebogenen Form der multifunktionellen Halterung (10) liegen und dazu bestimmt sind, an dieser Letzteren auf dem hinteren Teil der Aufhängung (1) zu befestigen, und einer dritten Befestigungsstelle (P1), die auf dem zweiten Ende (10B) der gebogenen Form der multifunktionellen Halterung (10) liegt und dazu bestimmt ist, diese Letztere auf dem vorderen Teil der Aufhängung (1) zu befestigen.

2. Multifunktionelle Halterung nach Anspruch 1, **dadurch gekennzeichnet, dass** die zwei Befestigungsstellen (P2, P3) auf dem hinteren Teil der Aufhängung (1) Befestigungsstellen der multifunktionellen Halterung (10) im Bereich der Aufhänger (6) des Abgasstrangs (2) des Fahrzeugs sind.

3. Multifunktionelle Halterung nach einem der vorhergehenden Ansprüche, **dadurch gekennzeichnet, dass** die Befestigungsstelle (P1) auf dem vorderen Teil der Aufhängung (1) eine Befestigungsstelle der multifunktionellen Halterung (10) auf der Gabel des Verdrehsicherungsschwingarms des Fahrzeugs ist.

4. Multifunktionelle Halterung nach Anspruch 2, **dadurch gekennzeichnet, dass** sie zwei Metallpratzen (11, 12) aufweist, die in seitlicher Erweiterung des ersten Endes (10A) der multifunktionellen Halterung (10) sind und jeweils mit einer kreisförmigen Öffnung für das Durchgehen von Schraubmitteln an den zwei Befestigungsstellen (P3, P2) der multifunktionellen Halterung (10) auf dem hinteren Teil der Aufhängung (1) durchbohrt sind.

5. Multifunktionelle Halterung nach Anspruch 3, **dadurch gekennzeichnet, dass** sie im Bereich der Befestigungsstelle (P1) auf dem vorderen Teil der Aufhängung (1) eine Befestigungsschraube (15) umfasst, die in die Multifunktionalhalterung (10) zur Befestigung der multifunktionellen Halterung (10) auf der Gabel des Verdrehsicherungsschwingarms eingebaut ist.

6. Multifunktionelle Halterung nach Anspruch 5, **dadurch gekennzeichnet, dass** sie außerdem in der Nähe der Befestigungsstelle (P1) auf dem vorderen Teil der Aufhängung (1) eine Erweiterung (16) aufweist, die nach unten gerichtet ist, mit im Wesentlichen viereckiger Form, die dazu bestimmt ist, auf den vorderen Teil der Aufhängung (1) "geclipst" zu sein, um das Positionieren der multifunktionellen Halterung (10) auf der Aufhängung (1) zu erlauben.

7. Multifunktionelle Halterung nach einem der vorhergehenden Ansprüche, **dadurch gekennzeichnet, dass** sie eine Befestigungsschnittfläche des Druckdifferenzsensors (5) des Teilchenfilters des Fahrzeugs aufweist, wobei die Schnittfläche einerseits eine Befestigungsschraube (13) umfasst, die in die multifunktionelle Halterung (10) zur Befestigung des Druckdifferenzsensors (5) eingebaut ist, und andererseits eine kreisförmige Öffnung (14), die das Positionieren des Druckdifferenzsensors (5) erlaubt und das Drehen dieses Letzteren verhindert.

8. Multifunktionelle Halterung nach einem der vorhergehenden Ansprüche, **dadurch gekennzeichnet, dass** sie zwei längliche Öffriungen (19A, 19B) aufweist, die als Befestigungsschnittflächen der Kanalisation (8) des Systems zur selektiven katalytischen Reduktion des Fahrzeugs dienen.

9. Multifunktionelle Halterung nach einem der vorhergehenden Ansprüche, **dadurch gekennzeichnet, dass** sie zwei längliche Öffnungen (18A, 18B) aufweist, die als Befestigungsschnittfläche des Versorgungskabelbündels (7) des Druckdifferenzsensors (5) des Teilchenfilters des Fahrzeugs dienen.

10. Multifunktionelle Halterung nach einem der vorhergehenden Ansprüche, **dadurch gekennzeichnet, dass** sie aus einem starren Kunststoff hergestellt ist.

11. Fahrzeug, insbesondere Kraftfahrzeug, das eine multifunktionelle Halterung umfasst, die auf der Aufhängung (1) befestigt ist, um das Befestigen des Druckdifferenzsensors (5) des Teilchenfilters, des Versorgungskabelbündels (7) des Druckdifferenzsensors (5) und der Kanalisation (8), die von dem Behälter des Systems zur selektiven katalytischen Reduktion kommt, zu erlauben, **dadurch gekennzeichnet, dass** die multifunktionelle Halterung (10) einem der vorhergehenden Ansprüche entspricht.

## Claims

1. A multifunctional mounting for attaching a plurality of parts to the chassis of a vehicle, said mounting having a generally curved shape that is folded onto itself yet is open, and attached to the cradle (1) of the chassis at attachment points located at the ends of said open curved shape, so as to pass over the electric power steering mechanisms (3) of the vehicle, said mounting having interfaces for attaching said plurality of parts to the cradle (1) of the vehicle, **characterized in that** it is attached, in particular by screwing, to the cradle (1) of the chassis at three attachment points (P1, P2, P3), namely two attachment points (P2, P3) which are located at a first end (10A) of said curved shape of the multifunctional mounting (10) and which are intended to attach the latter to the rear part of the cradle (1), and a third attachment point (P1), which is situated at the second end (10B) of said curved shape of the multifunctional mounting (10) and which is intended to attach the latter to the front part of the cradle (1).

2. The multifunctional mounting according to Claim 1, **characterized in that** the two attachment points (P2, P3) on the rear part of the cradle (1) are attachment points of said multifunctional mounting (10) at the level of the suspenders (6) of the exhaust line (2) of the vehicle.

3. The multifunctional mounting according to any one of the preceding claims, **characterized in that** the attachment point (P1) on the front part of the cradle (1) is an attachment point of said multifunctional support (10) on the yoke of the anti-torque rod of the vehicle.

4. The multifunctional mounting according to Claim 2, **characterized in that** two metallic lugs (11, 12), which are in lateral extension of the first end (10A) of the multifunctional mounting (10) and which are each pierced by a circular orifice for the passage of screwing means to the two attachment points (P3, P2) of the multifunctional mounting (10) on the rear part of the cradle (1).

5. The multifunctional mounting according to Claim 3, **characterized in that** it comprises, at the level of the attachment point (P1) on the front part of the cradle (1), an attachment screw (15), integrated to the multifunctional mounting (10), for the attachment of said multifunctional mounting (10) on the yoke of the anti-torque rod of the vehicle.

6. The multifunctional mounting according to Claim 5, **characterized in that** it presents, in addition, in the vicinity of the attachment point (P1) on the front part of the cradle (1), an extension (16) directed downwards, of substantially quadrangular shape, intended to be "clipped" on the front part of the cradle (1) to permit the positioning of said multifunctional mounting (10) on the cradle (1).

7. The multifunctional mounting according to any one of the preceding claims, **characterized in that** it presents an attachment interface of the pressure difference sensor (5) of the particle filter of the vehicle, which interface comprises, on the one hand, an attachment screw (13), integrated to the multifunctional mounting (10), for the attachment of the pressure difference sensor (5), and on the other hand a circular orifice (14), which permits the indexing of said pressure difference sensor (5) and prevents the rotation of the latter.

8. The multifunctional mounting according to any one of the preceding claims, **characterized in that** it presents two oblong orifices (19A, 19B) serving as attachment interfaces of the piping (8) of the selective catalytic reduction system of the vehicle.

9. The multifunctional mounting according to any one of the preceding claims, **characterized in that** it presents two oblong orifices (18A, 18B) serving as attachment interface of the power supply wiring loom (7) of the pressure difference sensor (5) of the particle filter of the vehicle.

10. The multifunctional mounting according to any one of the preceding claims, **characterized in that** it is made from rigid plastic material.

11. A vehicle, in particular a motor vehicle, which comprises a multifunctional mounting attached to the cradle (1) to permit the attachment of the pressure difference sensor (5) of the particle filter, of the power supply wiring loom (7) of said pressure difference sensor (5) and of the piping (8) originating from the reservoir of the selective catalytic reduction system, **characterized in that** said multifunctional mounting (10) is in accordance with any one of the preceding claims.
